# EUROPEAN PATENT APPLICATION

(11) **EP 1 170 968 A2**
(43) Date of publication of application: **09.01.2002**
(21) Application number: 01106392.2
(22) Date of filing: 20.03.2001
(51) Int. Cl.: H04Q 7/32, H04N 7/14

(54) **Radio communication apparatus and method**

(30) Priority: 05.07.2000 JP 2000204100
(71) Applicant: KABUSHIKI KAISHA TOSHIBA, Kawasaki-shi (JP)
(72) Inventor: Inoue, Nobuhiro, c/o Kabushiki Kaisha Toshiba, Minato-ku, Tokyo 105-8001 (JP)
(74) Representative: HOFFMANN - EITLE

(57) **Abstract**

The radio communication apparatus comprises a liquid crystal display unit (34) and a control unit (25) for driving a display unit (34). In a moving picture display mode, the mode is stored in an operation-mode storing unit (26). A display speed corresponding to this mode is stored in a display-speed storing unit (27). Therefore, the control unit (25) controls the display unit (34) at 30 frames/second. In a high-speed text display mode for displaying a text, the display unit (34) is controlled to operate at 20 frames/second. In a mode for displaying a simple text string, 1 frame/second is set as a display speed. In a normal conversation mode, the display unit (34) is controlled such that the display unit (34) is in standby status. Accordingly, the display unit (34) displays least necessary images in accordance with data to be displayed. It is thus possible to provide a radio communication apparatus having a TV-phone function capable of reducing the power consumption.

## Description

The present invention relates to a radio communication apparatus having a TV-phone function, and particularly, to a radio communication apparatus having a TV-phone function capable of controlling an image on a display unit.

In recent years, in the field of the radio communication apparatus each of which comprises a display unit composed of liquid crystal or the like, developments have been made in a so-called TV-phone that displays not only texts and still pictures but also has a TV-phone function capable of displaying moving pictures such as videos, animations, and the like along conversation. Improvements have rapidly come to be made in this function.

In a radio communication apparatus having this kind of the TV-phone function, a lot of modes are considered without being limiting to a voice conversation mode in which speech signals are transmitted/received like a conventional radio communication apparatus. That is, the apparatus is expected to be used in a short-mail mode in which character strings including a relatively small number of characters are transmitted/received, a mail communication transfer mode in which text mails including a large number of characters are transmitted/received, a still picture communication mode in which still pictures are transmitted/received, and a video communication mode in which video data having a large data volume is transmitted/received.

In a radio communication apparatus that is thus expected to be used in various modes, a battery capacity as its power source must be enhanced. In order to enhance the battery capacity, the size of the battery is also enlarged so that its portability is deteriorated. To solve this problem, improvements of the battery have been promoted. This improvement requires that the portability should not be hindered and the expandability should be maintained. That is, it is demanded that the radio communication apparatus should constantly be driven with least necessary power.

The present invention has an object of providing a radio communication apparatus having a TV-phone function capable of reducing the current consumption of the display unit by letting the display unit display least necessary images, in accordance with data to be displayed.

The present invention has another object of providing a radio communication apparatus having a TV-phone function, in which a mode of data to be displayed can be specified and the data can be displayed on the display unit.

According to the present invention, there is provided a radio communication apparatus comprising:
receiving means for receiving a signal including a speech signal and a data signal, and separating the speech signal and the data signal from the signal;
voice outputting means for converting the speech signal into a voice, and outputting the voice;
converting means for converting the data signal into a display signal;
a display displaying data in accordance with the display signal at a display speed; and
display controlling means for setting the display speed for displaying an image on the display, the display speed being selected from values of display speeds.

Moreover, according to the present invention, there is provided a radio communication method comprising:
receiving a signal including a speech signal and a data signal;
converting the data signal separated from the signal into a display signal;
setting a display speed selected from values of display speeds for displaying data; and
displaying the data as an image based on the display signal at the set display speed.

This summary of the invention does not necessarily describe all necessary features so that the invention may also be a sub-combination of these described features.

The invention can be more fully understood from the following detailed description when taken in conjunction with the accompanying drawings, in which:
FIG. 1A is a front view showing the front surface of a radio communication apparatus having a TV-phone function, according to the fist embodiment of the present invention;
FIG. 1B is cross-sectional views of a display unit of the radio communication apparatus, cut along the line A-B shown in FIG. 1A, according to methods for displaying an image and the like on the display unit, using a back light (upper diagram) and a front light (lower diagram);
FIG. 1C is a side view showing the side surface of the radio communication apparatus shown in FIG. 1A;
FIG. 2 is a functional block diagram showing an electrical internal structure of the radio communication apparatus shown in FIG. 1A;
FIG. 3 is a flowchart indicating the process that receiving a radio-frequency signal, outputting a voice and displaying an image at a preset display speed by the electrical internal structure shown in FIG. 2;
FIG. 4 is a functional block diagram showing an electrical internal structure of an LCD control unit provided in a baseband unit and an LCD unit provided in an input/output unit shown in FIG. 2;
FIG. 5A is a timing chart showing timings of an image control signal and image data in case one line of one frame is output from the LCD control unit to the LCD unit shown in FIG. 2;
FIG. 5B is a timing chart showing timings of an image control signal and image data in case one frame is output from the LCD control unit to the LCD unit shown in FIG. 2;
FIG. 6A is a timing chart showing timings of an image control signal and image data in case one line of one frame is output from the MM processing unit shown in FIG. 2 to the MPEG-4 IF in the LCD control unit shown in FIG. 4;
FIG. 6B is a timing chart showing timings of an image control signal and image data in case one frame is output from the MM processing unit shown in FIG. 2 to the MPEG-4 IF in the LCD control unit shown in FIG. 4;
FIG. 7 is a schematic view showing the LCD panel shown in FIG. 4, pixels (composed of transparent electrodes and liquid crystal layer) constructing the LCD panel, and a simplified diagram of circuits connected with the pixels;
FIG. 8 is a schematic view showing input/output of the operation-mode storing unit shown in FIG. 2 and correspondence between the operation modes (input) and ID numbers (output);
FIG. 9 is a schematic view showing input/output of the display-speed storing unit shown in FIG. 2 and correspondence between ID numbers (input) and display speeds (output);
FIG. 10A is a timing chart showing an example of a data transfer timing from the LCD IF in the LCD control unit to the driver in the LCD unit shown in FIG. 4;
FIG. 10B is a timing chart showing an example of a data transfer timing based on the data transfer timing shown in FIG. 10A, where the CLK frequency is reduced;
FIG. 11 is a flowchart indicating that the display speed of an image displayed in the LCD unit may be variable based on variation of frequency of the base clock signal in the clock generator shown in FIG. 4;
FIG. 12 is a functional block diagram showing an electrical internal structure of an LCD control unit provided in a baseband unit and an LCD unit provided in an input/output unit in a radio communication apparatus according to the second embodiment of the present invention, corresponding to FIG. 4;
FIG. 13A is a timing chart showing an example of a data transfer timing from the LCD IF in the LCD control unit shown in FIG. 12 to the driver in the LCD unit shown in FIG. 2;
FIG. 13B is a timing chart showing an example of a data transfer timing based on the data transfer timing shown in FIG. 13A, where the number of falls of the VSYNC signal is reduced; and
FIG. 14 is a flowchart indicating that the display speed of an image displayed in the LCD unit may be variable based on variation of an interval of the VSYNC in the clock generator shown in FIG. 12, and variation of a transfer timing of transferring the RGB pixel data.

In the following, a radio communication apparatus according to the embodiment of the present invention will be explained with reference to the drawings.

In the embodiment, an image displayed on the display screen can be changed automatically according to the type of data or a predetermined key pressed by a user. Images that can be changed are set to four types from videos which most consume the electric power of the portable phone up to images such as a small number of texts, still figures, and the like (showing a residual amount of the battery, receiving status of a radio wave, and the like and called a stand-by hereinafter). Specifically, there are prepared four types of operation modes, i.e., a moving picture display mode (also called a video communication mode), a high-speed text display mode (also called a mail communication/transfer mode), a text display mode (also called a short mail communication mode), and a stand-by mode (also called a voice communication mode). For example, the image display speeds in these modes are respectively 30 f/s (frame numbers per second) in the moving picture display mode, 20 f/s in the high-speed text display mode, 10 f/s in the text display mode, and 2 f/s in the stand-by display mode.

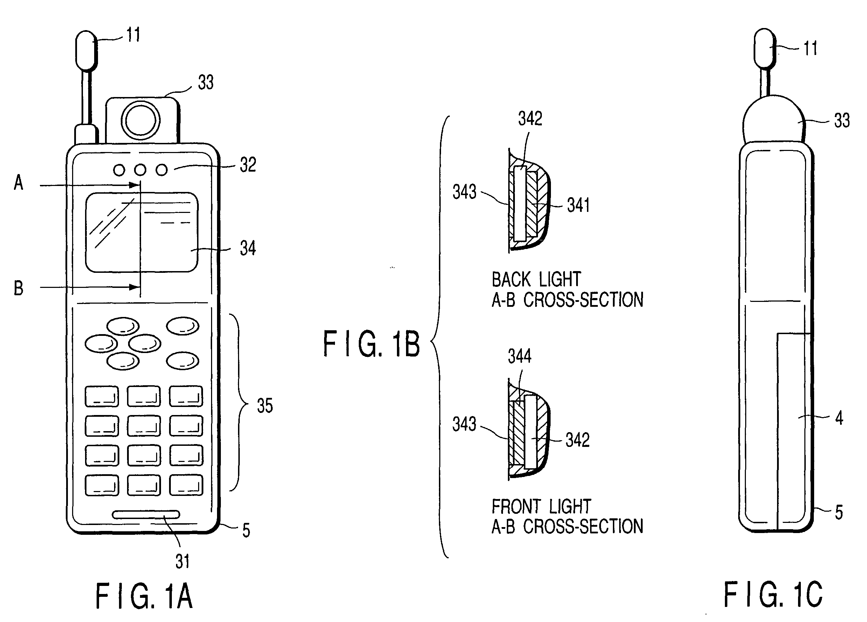

A specific example of a radio communication apparatus and method according to the first embodiment of the present invention is shown in FIGS. 1A to 11. FIGS. 1A, 1B, and 1C respectively show a front view showing the front surface of the radio communication apparatus, a cross-sectional view cut along a cross-section A-B in the display unit 34 shown in FIG. 1A, and a side view showing a side surface of the radio communication apparatus. Note that the upper diagram of FIG. 1B is a cross-sectional view of the display unit 34 for displaying an image by means of a back light 341. The lower diagram of FIG. 1B is a cross-sectional view of the display unit 34 for displaying an image by means of a front light 344.

The radio communication apparatus shown in FIG. 1A, i.e., the portable phone 5 has an antenna 11 for transmitting/receiving radio waves to and from the outside, and signals processed by the portable phone 5 are transmitted/received by the antenna 11. A signal received by the antenna 11 is processed in the portable phone 5, and a voice is output from a speaker 32 through which users can listen to the voice. Meanwhile, a microphone 31 is provided as a voice inputting means for inputting words as a voice given from a user to a receiver. In case the portable phone 5 is used as a TV-phone, a camera 33 as a video image obtaining means of obtaining an actual video image is turned on, and the video image is obtained by the camera 33. The video image thus obtained by the camera 33 is encoded as image data and transmitted. In addition, received image data is decoded by a circuit in the portable phone 5, and video signals are output to the display unit 34, thereby displaying video images on the display unit 34. Here, the term of a video image includes moving pictures, still pictures, texts, and the like, which are displayed as images. These operations are implemented through a key input unit 35 comprised of a plurality of keys. For example, there are numeric keys for inputting phone numbers, a key for displaying an operation menu, a key for switching a displayed image to a moving picture or still picture (that is an extracted frame from texts or a moving picture), and the like.

The display unit 34 adopts a method using a back light 341 and another method using a front light 344. The upper diagram of FIG. 1B shows the case of the back light method. In this case, an LCD (liquid crystal display panel) 342 is sandwiched between the back light 341 and the protection cover 343. Light is emitted in the direction toward a protection cover 343 from the back light 341. Therefore, users watch the display screen from the side of the front cover 343. The lower diagram of FIG. 1B shows the case of the front light method. In this case, the front light 344 is sandwiched between the protection cover 343 and the LCD panel 342. Light is emitted in the direction toward the protection cover 343 from the LCD panel 342. Like the case of the back light 341, users watch the display screen from the side of the protection cover 343. In case of the back light method, video images are displayed by transmitted light. In the case of the front light method, video images are displayed by reflected light.

FIG. 1C is a side view showing the side surface of the casing of the portable phone. A battery such as a Lithium ion battery is provided in the casing. Circuits in the portable phone are supplied with a power by the battery.

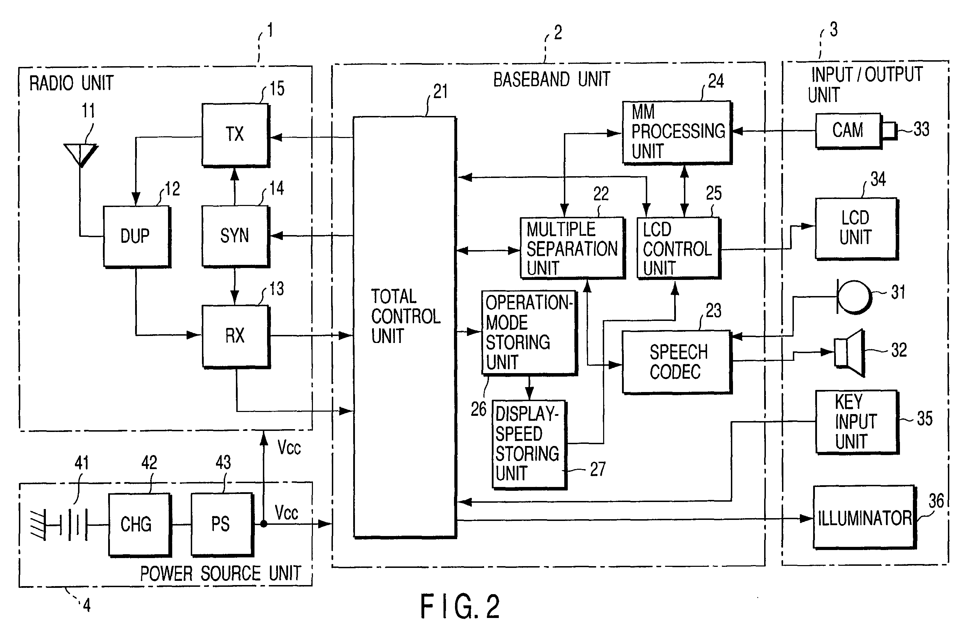

According to FIG. 2, the portable phone 5 is constructed by a radio unit 1, a baseband unit 2, an input/output unit 3, and a power source unit 4. FIG. 2 is a block diagram showing the electrical internal structure of the portable phone 5.

In FIG. 2, a radio-frequency signal transmitted over a radio channel for a movable communication system from a base station is received by the antenna 11 and is then input to a receiver circuit (RX) 13 through an antenna duplexer (DUP) 12. The receiving circuit 13 comprises a high-frequency wave amplifier, a frequency converter, and a demodulator. Further, the radio-frequency signal is subjected to low-noise amplification by a low-noise amplifier, and is mixed with a receiving local-oscillation signal generated by a frequency synthesizer (SYN) 14 in the frequency converter, thus being subjected to frequency conversion into a receiving middle-frequency signal or a receiving baseband signal. The output signal thereof is subjected to digital demodulation by the demodulator. For example, as a demodulation method, an orthogonal demodulation method corresponding to a QPSK (quadrature phase shift keying) method is used. Note that the frequency of the receiving local-oscillation signal generated from the frequency synthesizer 4 is operated from a total control unit 21.

The demodulated signal output from the demodulator is input to the baseband unit 2. The baseband unit 2 comprises a total control unit 21, a multiple separation unit 22, a speech coding-encoding unit (that will be hereinafter abbreviated as a speech codec) 23, a multi-media processing unit (hereinafter abbreviated as an MM processing unit) 24, an LCD control unit 25, an operation-mode storing unit 26, and a display-speed storing unit 27.

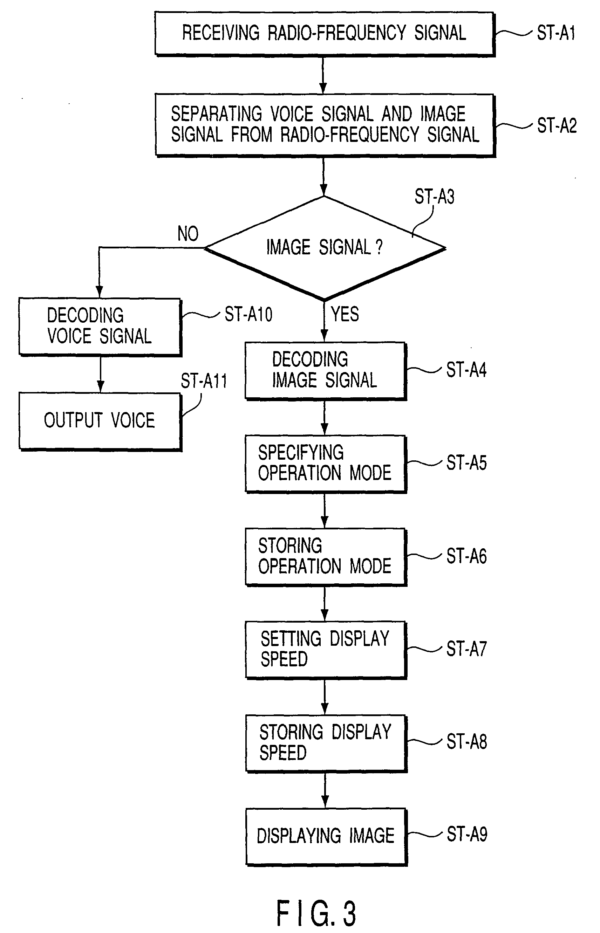

With reference to FIG. 3, a flow of receiving the radio-frequency signal, outputting a voice and displaying an image is explained.

The radio-frequency signal is input as a receiving signal to receiving circuit 13 through an antenna duplexer (DUP) 12 (ST-A1). Whether the demodulated signal in this receiving circuit 13 is control information or multi-media information is distinguished by the total control unit 21. If the demodulated signal is multi-media information, it is supplied to the multiple separation unit 22, and then in the unit 22 voice data and image data are separated (ST-A2, ST-A3). The image data is compressed data, e.g., MPEG-4 format data. Further, the image data is supplied to the MM processing unit 24, and subjected to an image decoding process. An image signal thus reproduced is output to the LCD control unit 25. In the MM processing unit 24, the image data is expanded (ST-A4). An operation-mode indicating signal that indicates an operation mode is input from the total control unit 21 to the operation-mode storing unit 26 (ST-A5). One of operation modes (operation modes include above-mentioned four modes) indicated by the operation-mode indication signal is stored in the operation-mode storing unit 26 (ST-A6). Next, in the display-speed storing unit 27, the display speed (frame numbers per unit time) corresponding to the operation mode is set (ST-A7). A displaying speed signal that indicates the display speed is output to the LCD control unit 25. The displaying speed is stored in the display-speed storing unit (ST-A8). Thereafter, the image signal that includes data of the image displayed in LCD unit 34 is supplied to an LCD unit 34 of the input/output unit 3 and displayed in the LCD unit 34 (ST-A9). Meanwhile, the voice data is supplied to the speech codec 23 and subjected to speech decoding (ST-A10). A speech signal thus reproduced is enhanced and output as a voice by the speaker 32 of the input/output unit 3 (ST-A11).

Received image data is stored into a RAM (random access memory; not shown) in the total control unit 21 for the occasion that has arisen. The LCD unit 34 displays various information indicating operation status of the device itself, such as a telephone directory, a receiving electric-field-strength detection value, a residual amount of the battery, and the like, which is output from the total control unit 21.

Meanwhile, a speech signal of a user output from the microphone 31 in the input/output unit 3 is input to the speech codec 23 in the baseband unit 2, being encoded by the speech codec 23, and then being input to the multiple separation unit 22. In addition, the image signals output from the camera (CAM) 33 is input to the MM processing unit 24 in the baseband unit 2, being subjected to an image encoding process, and then being input to the multiple separation unit 22. In the multiple separation unit 22, the voice data and image data encoded as described above are duplexed in a predetermined format. The duplexed data is input from the total control unit 21 to the transmitting circuit (TX) 15 in the radio unit 1.

The transmitting circuit 15 comprises a modulator, a frequency converter, and a transmission power amplifier. The transmission data is subjected to digital modulation by the modulator, and is thereafter mixed with a transmission local-oscillation signal generated from the frequency synthesizer by the frequency converter, thus frequency being converted into a radio-frequency signal. The QPSK method is used as a modulation method. Further, a transmission radio-frequency signal thus generated is amplified to a predetermined transmission level by the transmission power amplifier, and is thereafter supplied to the antenna 11 through the antenna duplexer 12. Thus, the signal is transmitted from the antenna 11 to a base station not shown.

The power source unit 4 is provided with a battery 41 such as a Lithium ion battery or the like, a charger (CHG) 42 for charging the battery 41, and a power supply (PS) 43. The power supply 43 is constructed by, for example, a DC/DC converter and generates a predetermined power source voltage Vcc based on the output voltage of the battery 41.

In addition, the input/output unit 3 is provided with an illuminator 36 for illuminating the LCD unit 34 and the key input unit 35 during operation and communication. This illuminator 36 is, for example, called a backlight or an illumination.

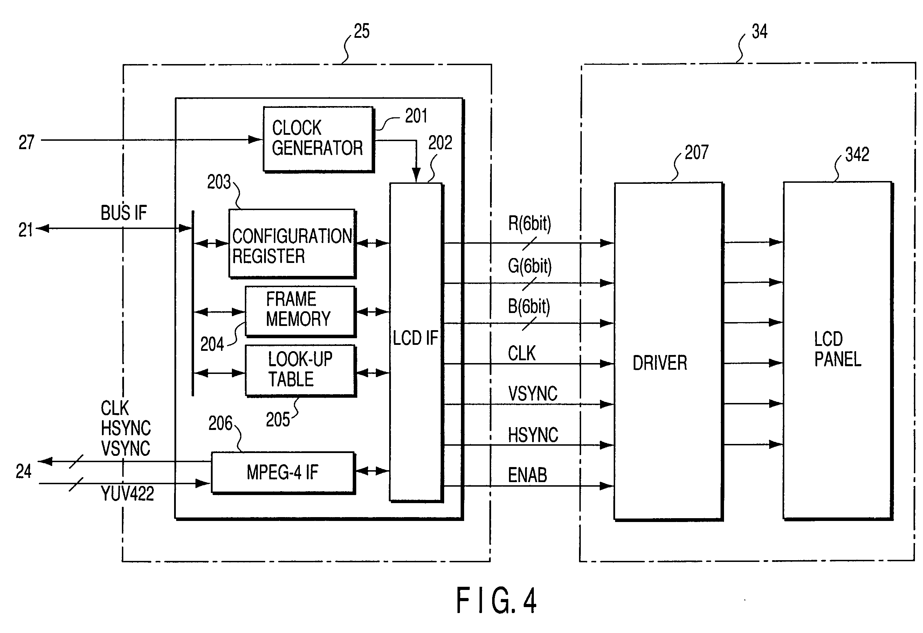

The structure and the operation of the LCD control unit 25 will be explained in details with reference to FIGS. 4 to 6.

FIG. 4 is a block diagram showing the LCD control unit 25 and the LCD unit 34.

The LCD control unit 25 has a clock generator 201 that generates a base clock signal (CLK) for controlling image signals and synchronization signals that are output to the LCD unit 34. The clock generator 201 inputs a frequency control signal for controlling the frequency of the base clock signal generated by the clock generator 201 from the display-speed storing unit 27. In response to the frequency control signal, the clock generator 201 outputs a base clock signal having a desired frequency to an LCD interface (LCD IF) 202. The LCD IF 202 is an interface that connects the LCD control unit 25 and the LCD unit 34, thereby displaying an image signal or the like for displaying an image. Further, the LCD control unit 25 inputs an image control signal for controlling images from the total control unit 21 through a BUS interface (BUS IF). The image control signal input through the BUS IF is input to circuits of a configuration register 203, a frame memory 204, and a look-up table 205. In these circuits, the image signal, which is input from the MM processing unit 24 to the LCD control unit 25 and expanded, is input to these circuits through the LCD IF 202. Based on the image signal, the three circuits (203, 204, and 205) control the image signal, and a desired image signal is output to a driver 207 in the LCD unit 34 through the LCD IF 202.

The configuration register 203 controls the layout and size of an image that are determined by the screen size of the LCD panel 342. In addition, the configuration register 203 specifies, for example, where on the screen of the LCD panel 342 an image should be positioned, and where on the screen a text should be positioned. In this manner, it is possible to control the layout of the image displayed on the display screen.

The look-up table 205 is a controlling means for adding a large number of colors including transparence to the displayed image. The number of colors is determined by the bit number of image data. For example, the color of transparence is selected at a position on the display screen. At the position, an image based on the image signal is directly output to the screen based on an image signal input from the MM processing unit 24 and expanded. In case of another example the red color is specified to another position on the display screen, the image in red is only displayed at this position. That is, the image based on the MM processing unit 24 is not displayed at this position on the display screen. Thus, the look-up table 205 can color the image displayed on the LCD panel 342.

The frame memory 204 inputs and temporarily stores an image signal input from the MM processing unit 24 and expanded. The color as described above is supplied to every pixel of the LCD panel 342 that performs display by referring to a color information of the look-up table 205. In addition, the position of each of the pixels constructing the LCD panel 342 is specified in the configuration register 203. Further, image data is written into a line buffer every one line of an image, and simultaneously, image data is output to the LCD IF 202 from the line buffer for every one line.

Based on the base clock signal generated by the clock generator 201, a horizontal synchronization signal (HSYNC) and a vertical synchronization signal (VSYNC) are generated by the LCD IF 202. The HSYNC and VSYNC are synchronized with the base clock signal. The frequency of the HSYNC indicates the number of scanning lines per unit time. The frequency of the VSYNC indicates the number of times for which one frame is updated per unit time (refresh rate). Further, to display an image on the LCD display screen, an enable signal (ENAB) by which the RGB signal output to the driver 207 of the LCD is rendered effective is generated also by LCD IF 202.

These CLK, HSYNC, and VSYNC are output to the MM processing unit 24 through an MPEG-4 interface (IF) 206. The MM processing unit 24 outputs an image signal according to these three image control signals, to the MPEG-4 IF 206. Image data is input, in the format of YUV422, to the MPEG-4 IF 206 from the MM processing unit 24. The image data of this YUV422 is converted into RGB pixel data by the MPEG-4 IF 206 and is stored in the frame memory 204. The RGB pixel data stored in the frame memory 204 is output to the driver 207 of the LCD, by referring to the configuration register 203 and look-up table 205, based on the synchronization signal depending on the base clock.

In this manner, the RGB pixel data synchronized with the CLK, HSYNC, and VSYNC can be obtained. As a result of this, the RGB pixel data stored in the frame memory 204 is output to pixels on the LCD panel 342, and thus, an image is displayed on the LCD panel 342.

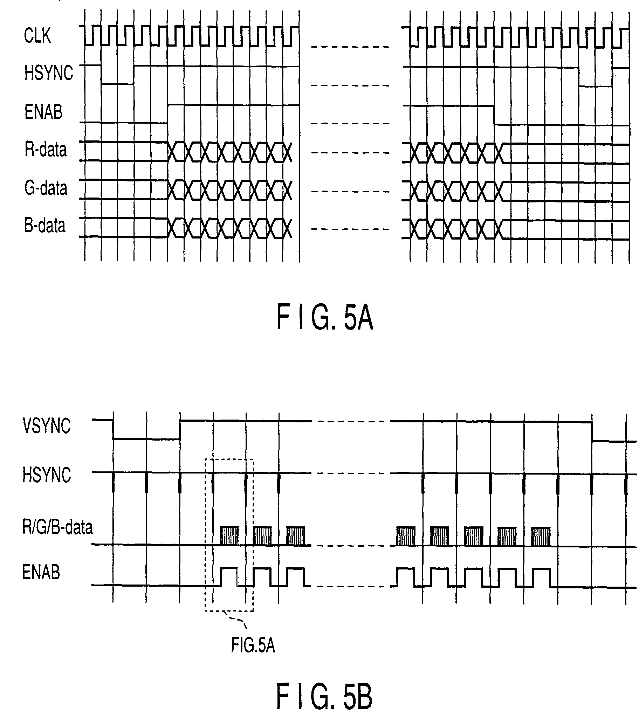

With reference to FIGS. 5A and 5B, timings of signals to be input to the driver 207 of the LCD will be explained. FIGS. 5A and 5B are timing charts showing image data and image control signals output from the LCD control unit 25 to the LCD unit 34.

FIG. 5A is a timing chart showing timings of the image control signal and image data in case one line of one frame is output.

During a period from a low level of HSYNC to a next low level thereof, one line is output from the LCD control unit 25 to the LCD unit 34. That is, ENAB is rendered high during a preset duration between the low level and the next low level as shown in FIG. 5A. By the high ENAB, the RGB pixel data is output to the driver 207 of the LCD. The RGB pixel data is varied at a fall timing (i.e. timing when a pulse changes from high level to low level) of CLK and is transferred to the driver 207 of the LCD at a rise timing (i.e. timing when a pulse changes from low level to high level) thereof. Further, the amount of transfer data of the RGB pixel data corresponds to the length of one line, which is the lateral length of the screen.

FIG. 5B is a timing chart showing timings of the image control signal and image data in case one frame is output.

One frame is output from the LCD control unit 25 to the LCD unit 34 during a period from a low level of VSYNC to a next low level thereof. That is, between these low levels, there are rectangular signals for the number of lines included in one frame. Further, during the period when the ENAB is high, the RGB pixel data is output to the driver 207 of the LCD. The period when the ENAB is high, i.e., the unit surrounded by a rectangular broken line part shown in FIG. 5B, corresponds to FIG. 5A. In addition, the number of rectangular wave signals corresponds to the number of lines existing in one frame.

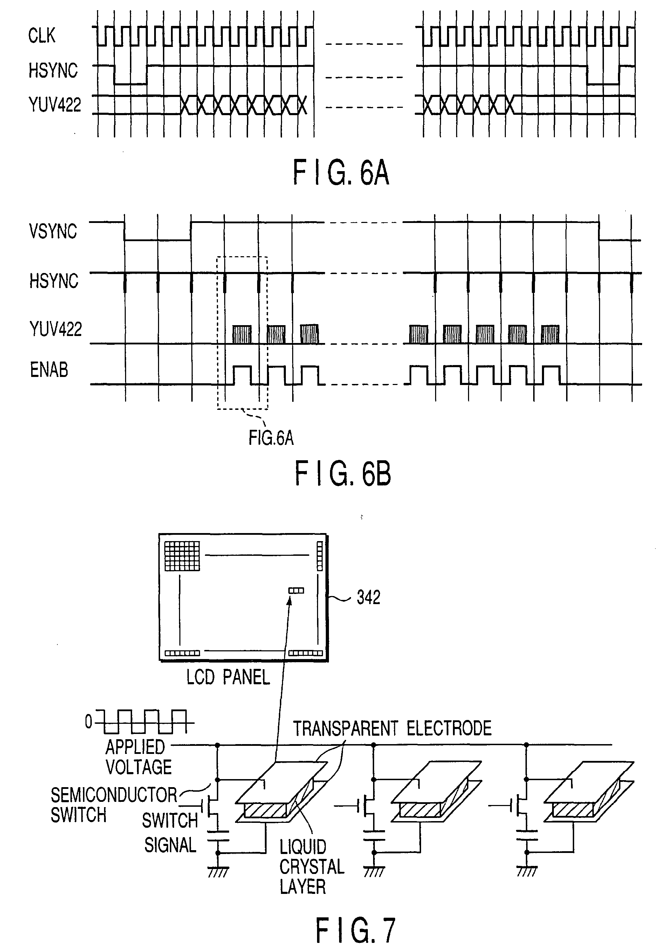

With reference to FIGS. 6A and 6B, explanation will be made of timings of image data based on YUV422, which is input from the MM processing unit 24 to the MPEG-4 IF 206 in the LCD control unit 25, and timings of CLK, HSYNC, and VSYNC output from the MPEG-4 IF 206 to the MM processing unit 24. FIGS. 6A and 6B are timing charts showing timings of image data and image control signals, which are output from the MM processing unit 24 to the MPEG-4 IF 206 in the LCD control unit 25.

FIG. 6A is a timing chart showing timings of an image control signal in case one line of one frame is output like FIG. 5A. FIG. 6B is a timing chart showing timings of the image control signal in case one frame is output like FIG. 5B. The rectangular part surrounded by a broken line in FIG. 6B corresponds to FIG. 6A. These figures are different from FIGS. 5A and 5B in the point that the direction of the image data is an input direction to the LCD control unit 25, and that the image data is not RGB pixel data but image data based on the YUV422 format. The YUV422 is a format that is a series of Cr, Y, Cb, Y, Cr, Y, Cb ··· or the like. In the LCD control unit 25, image data based on the input signal YUV422 output from the MM processing unit 24 and the RGB pixel data as output data to the LCD driver 207 are synchronized with each other in some cases and are not synchronized in other cases.

The RGB pixel data described above drives the driver 207 in the LCD unit 34 and thereby displays an image on the LCD panel 342. The LCD unit 34 comprising the driver 207 and the LCD panel 342 is shown in FIG. 7. FIG. 7 is a schematic view showing an LCD panel 342, pixels (made of transparent electrodes and liquid crystal layer) constructing the LCD panel 342, and a simplified diagram of circuits connected with the pixels.

In the LCD unit 34, in order to adjust directions of liquid crystal every time when the screen is updated, alternating current driving is executed. With respect to each pixel of the LCD panel 342, a liquid crystal layer is provided between transparent electrodes opposed to each other, and the electrodes are driven by an alternating current. If the alternating current driving is thus executed, the opposed electrodes repeat charging and discharging. Therefore, electric power is consumed by the charging and discharging. In addition, circuits of the display unit except for those of the LCD unit 34 increase their power consumption.

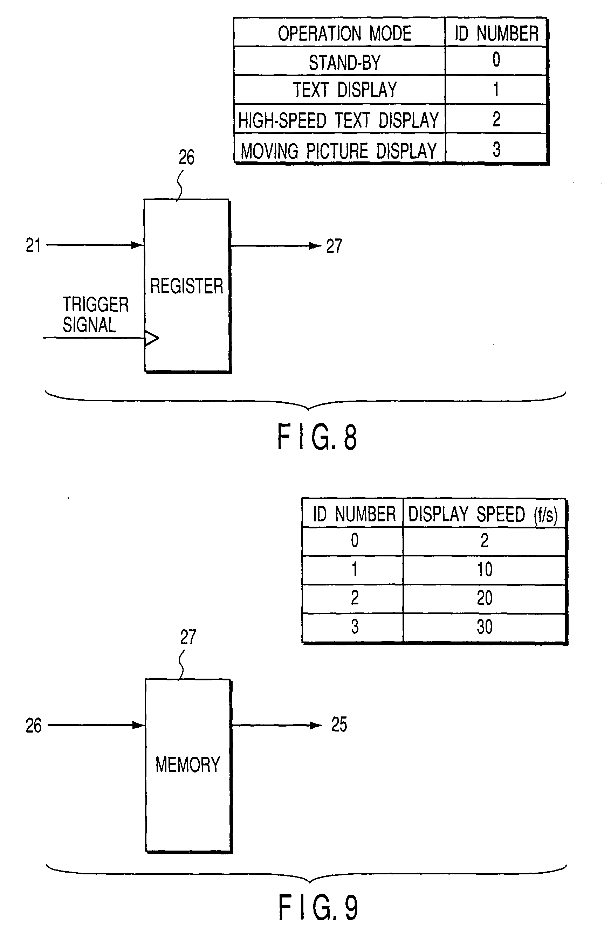

With reference to FIGS. 8 and 9, explanation will be made of the operation-mode storing unit 26 and the display-speed storing unit 27. FIG. 8 shows input/output of the operation-mode storing unit 26 and correspondence between operation modes and ID numbers. FIG. 9 shows input/output of the display-speed storing unit 27 and correspondence between ID numbers and display speeds.

If a signal for specifying an operation mode is output from the total control unit 21, the operation-mode storing unit 26 shown in FIG. 8 outputs an ID signal assigned with an ID number corresponding to the operation mode. In response to a trigger signal for storing information on the mode, the ID signal is stored in the operation-mode storing unit 26. The operation-mode storing unit 26 is a register. There is one-to-one correspondence between the operation modes and the ID numbers, so the ID numbers are determined uniquely. That is, the stand-by corresponds to 0, the text display to 1, the high-speed text display to 2, as well as the moving picture display to 3.

The display-speed storing unit 27 shown in FIG. 9 is a memory that stores a display speed corresponding to a mode. ID signals are input from the operation-mode storing unit 26, and display speed signals indicating display speeds are output to the LCD control unit 25. The relationship between the ID number and the display speed is as follows. That is, stand-by: 0 corresponds to 2 f/s, text display: 1 to 10 f/s, high-speed text display: 2 to 20 f/s, as well as moving picture display: 3 to 30 f/s.

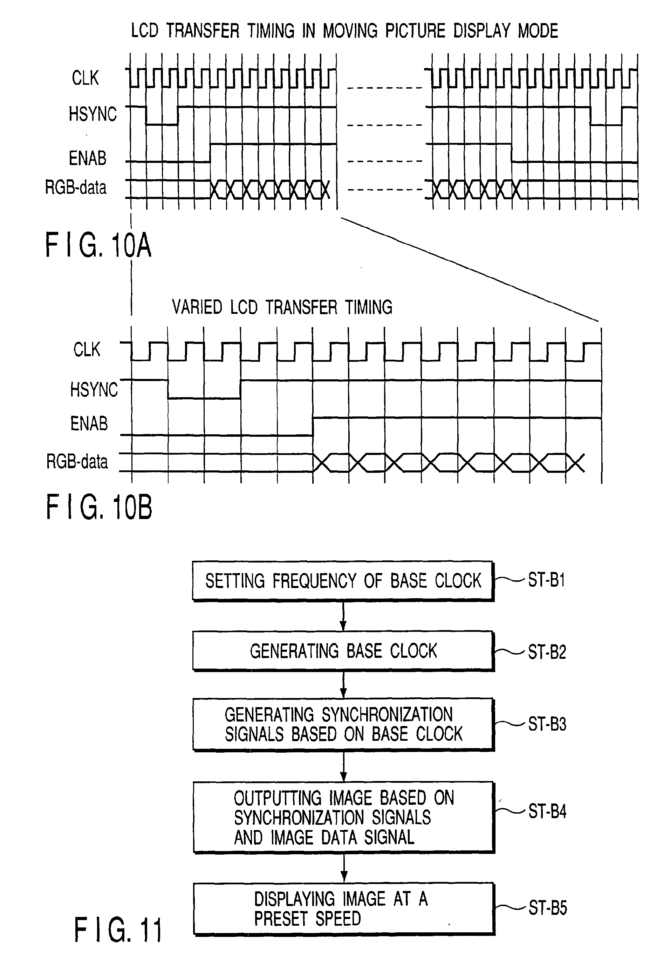

FIGS. 10A and 10B are timing charts showing examples of data transfer timings to the LCD unit 34 in the present embodiment. A base clock signal supplied to the LCD control unit 25 is rendered variable by the clock generator 201, and the speed of CLK itself is increased or decreased. In this case, the CLK frequency remains unchanged in the moving picture display mode. In the high-speed text display mode, the CLK frequency is reduced to 2/3 of an initial frequency. In the text display mode, the CLK frequency is reduced to 1/3 of the initial frequency. In the stand-by mode, the CLK frequency is reduced to 1/15 of the initial frequency. As the CLK frequency is thus reduced, an amount of the image data is also reduced. Therefore, the power consumption in the LCD panel 342 is reduced. This method needs only to add a clock change circuit to the LCD control unit 25, and thus, a portable phone 5 having a TV-phone function with low power consumption is obtained easily and simply.

With reference to FIG. 11, a flow indicating that the display speed of an image displaying in LCD unit 34 may be variable based on variation of frequency of the base clock signal in the clock generator 201 is explained.

An operation-mode indicating signal that indicates an operation mode is input from the total control unit 21 to the operation-mode storing unit 26. One of operation modes indicated by the operation-mode indication signal is stored in the display-speed storing unit 27. In the display-speed storing unit 27, the display speed corresponding to the operation mode is set. A signal corresponding to this display speed set above is output to the clock generator 201 (ST-B1). A frequency of the base clock is varied based on the signal (ST-B2). This frequency corresponds to the display speed. In the clock generator 201, a base clock signal for controlling an image signal and a synchronization signal that are output to the LCD unit 34 is generated. In the LCD IF 202 synchronization signals (HSYNC and VSYNC) is generated based on the base clock signal (ST-B3). The image data signal is input from MM processing unit 24 to the LCD control unit 25, and then the image data extracted from the image data signal is output to the LCD unit 34 based on the synchronization signal (ST-B4). In the LCD unit 34, an image is reproduced from the image data. The image extracted from this image data displays at a speed of the display speed corresponding to the clock frequency (ST-B5). In this way, the display speed is set to a preset speed.

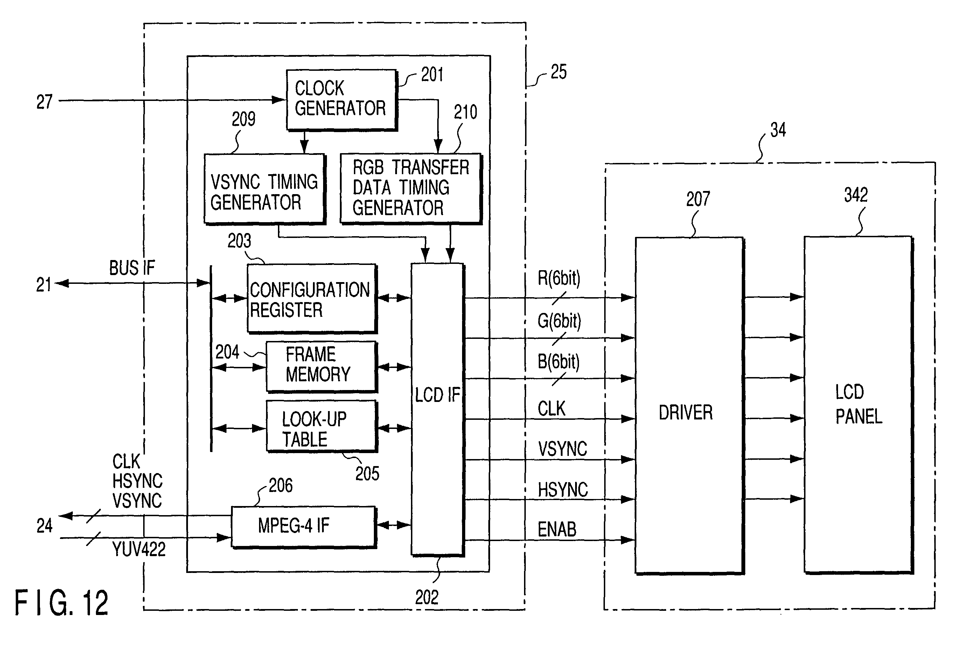

With reference to FIGS. 12, 13A, 13B, and 14 explanation will be made of a radio communication apparatus having a TV-phone function, and a radio communication method according to the second embodiment of the present invention. FIG. 12 is a block diagram showing an LCD control unit 25 and an LCD unit 34 in the radio communication apparatus having the TV-phone function according to the second embodiment.

In the first embodiment described above, the LCD panel 342 may not be operated well when the base clock frequency for transferring image data is extremely low, in some cases. If such an LCD panel 342 is used, there may not be a possibility that the display speed can be set very low.

Hence, the present embodiment shows a portable phone having a TV-phone function in which image data is reduced with the CLK frequency unchanged, so that very low power consumption is realized.

Specifically, timing information of VSYNC is generated by a VSYNC timing generator 209 based on a signal from a clock generator 201. Further, transfer timings of RGB pixel data are generated by an RGB transfer data timing generator 210 based on a signal from the clock generator 201.

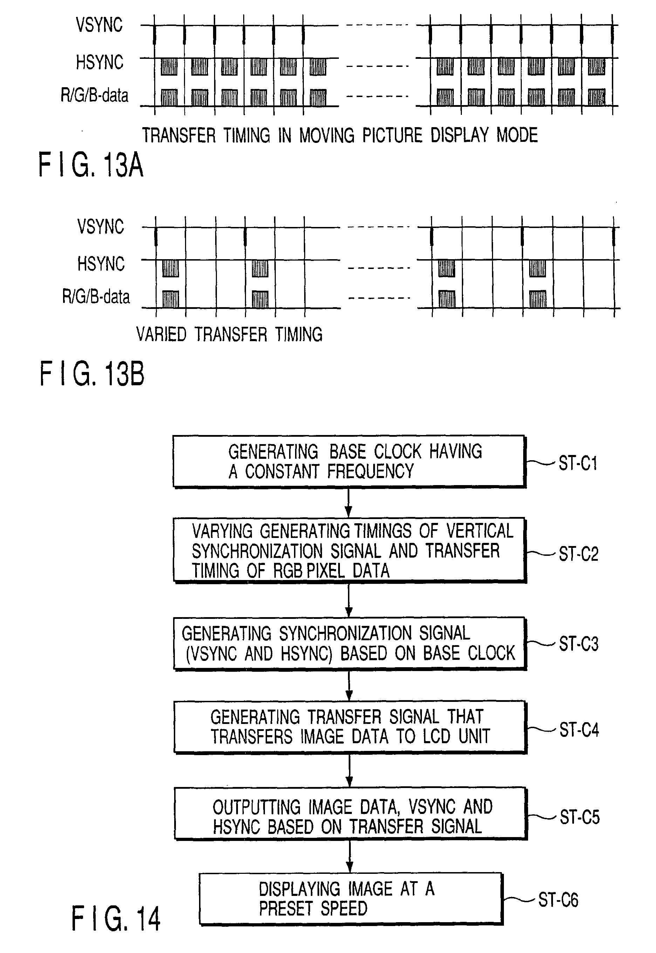

FIGS. 13A and 13B show that the transfer speed of the RGB pixel data is set constant and the interval of VSYNC is rendered variable. In this case, the period of the CLK is set constant. In addition, the RGB pixel data is transferred at the rise timing of the CLK. If the period of the CLK is constant, the transfer speed of the RGB pixel data is constant.

In this method, the VSYNC and the CLK are controlled separately. That is, the timing information of VSYNC and the transfer timing information of the RGB pixel data are controlled respectively.

With reference to FIG. 14 a flow indicating that the display speed of an image displaying in LCD unit 34 may be variable based on variation of a generating interval of the VSYNC in the clock generator 201, and variation of a transfer timing of transferring the RGB pixel data is explained.

An operation-mode indicating signal that indicates an operation mode is input from the total control unit 21 to the operation-mode storing unit 26. One of operation modes indicated by the operation-mode indication signal is stored in the display-speed storing unit 27. In the display-speed storing unit 27, the display speed corresponding to the operation mode is set. A signal corresponding to the display speed set above is output to the clock generator 201. The base clock having a constant frequency is generated based on the signal (ST-C1). The base clock controls the image signal and the synchronization signal that are output to the LCD unit 34. The generating interval of the VSYNC and the transfer timing of the RGB pixel data are varied in a VSYNC timing generator 209 and a RGB transfer timing generator 210 respectively based on the display speed signal (ST-C2). Based on the base clock signal, the synchronization signals (HSYNC and VSYNC) are generated in the LCD IF 202 (ST-C3). The image data signal is input from an MM processing unit 24 to an LCD control unit 25, and then a transfer signal that the image data extracted from the image data signal based on the synchronization signals is transferred to the LCD unit 34 is generated (ST-C4). The image data is output to the LCD unit 34 based on the transfer signal (ST-C5). In the LCD unit 34, an image is reproduced from the image data. The image extracted from the image data is displayed at a speed of the display speed corresponding to the CLK frequency (ST-C6). In this way, the display speed is set to a preset speed.

In the VSYNC timing generator 209, the number of falls of a signal is reduced at a predetermined ratio per unit time. According to the timing chart of the present embodiment shown in FIG. 13B, the number of falls of the VSYNC signal is reduced at a ratio of 3:1 per unit time. The ratio 3 to 1 is non-varied VSYNC fall interval to varied VSYNC fall interval. More specifically in the present embodiment, the VSYNC signal falls only once as shown in FIG. 13B during a period in which the VSYNC signal falls three times as shown in FIG. 13A.

Meanwhile, the RGB transfer data timing generator 210 controls the time when the RGB pixel data is transferred to the driver 207. As described above, the transfer speed at which the RGB pixel data is transferred to the driver 207 is the same as that of the transfer speed in case of conventional RGB transfer data. The present embodiment differs from the above one in that a period in which the RGB pixel data is not transferred is provided at a constant ratio in the present embodiment. Referring to FIGS. 13A and 13B, the data amount of the RGB pixel data that is transferred in a predetermined time period is reduced at a ratio of 3:1. That is, the present embodiment displays only one screen within a time period in which three screens are displayed in the moving picture display mode in the above embodiment. In addition, since the transfer timing of the RGB pixel data to the LCD unit 34 is constant, there is not possibility that the LCD panel 342 does not work and no image is displayed.

Meanwhile, in the RGB transfer data timing generator 210, the rise and fall timings of HSYNC are determined, based on the CLK. The rise and fall timings of ENAB are determined by the fall timing of HSYNC. As a result of this, timings of varying and transferring the RGB pixel data are determined.

By thus making the display speed of the display changeable according to the operation mode, it is possible to make changes such that 10 frames are displayed for every second in case of displaying a phone number, 30 frames are displayed for every second in the moving picture display mode, and several frames are displayed in the standby mode. Accordingly, the power consumption of the LCD panel 342 can be reduced.

The present invention is not limited to the embodiments described above but may be modified appropriately. For example, there may be provided a function of reducing power consumption of the operation of the LCD control unit 25 by repeatedly displaying one same screen stored in the RAM of the driver 207 of the LCD in case the screen does not change. The CLK frequency may be controlled depending on the operation mode, so that the power consumption is much more reduced.

As has been explained above, according to the radio communication apparatus having the TV-phone function of the present invention, the display speed at which the display panel is driven is changeable, so that a display speed corresponding to the operation mode is set, thereby realizing power saving.

## Claims

1. A radio communication apparatus **characterized in that** said apparatus comprises:
receiving means (1, 22) for receiving a signal including a speech signal and a data signal, and separating the speech signal and the data signal from the signal;
voice outputting means (23, 32) for converting the speech signal into a voice, and outputting the voice;
converting means (24, 25) for converting the data signal into a display signal;
a display (34) displaying data in accordance with the display signal at a display speed; and
display controlling means (25, 26, 27, 207) for setting the display speed for displaying an image on said display (34), the display speed being selected from values of display speeds.

2. The radio communication apparatus according to claim 1, **characterized in that** said display controlling means (25, 26, 27, 207) can select a display speed from speeds comprising a speed corresponding to a moving picture display mode and a speed corresponding to a text display mode.

3. The radio communication apparatus according to claim 2, **characterized in that** the speeds comprise a display speed corresponding to a first text display mode, and a second text display mode at a lower speed than a speed in the first text display mode.

4. The radio communication apparatus according to claim 1, **characterized in that** said display controlling means (25, 26, 27, 207) can set a display speed selected from variable speeds.

5. The radio communication apparatus according to claim 1, **characterized by** further comprising specifying means (21) for specifying a display mode corresponding to the display speed, wherein said display controlling means (25, 26, 27, 207) comprises:
storing means (26) for storing the specified display mode, and
setting means (27) for setting a display speed corresponding to the specified display mode.

6. The radio communication apparatus according to claim 1, **characterized in that** the display speed can vary with display modes comprising a moving picture display mode, a text display mode, and a stand-by display mode for displaying a stand-by image.

7. The radio communication apparatus according to claim 1, **characterized in that** said display controlling means (25, 26, 27, 207) comprises:
clock generating means (201) for generating a base clock;
synchronization signal generating means (202) for generating a synchronization signal based on the base clock;
signal outputting means (207) for driving and synchronizing said display (34) in accordance with the synchronization signal and the display signal, and displaying the image on said display (34); and
clock frequency setting means (27) for setting a frequency of the base clock in accordance with a set display speed, varying the synchronization signal and displaying the image at the set display speed.

8. The radio communication apparatus according to claim 1, **characterized in that** said display controlling means (25, 26, 27, 207) comprises:
clock generating means (201) for generating a base clock having a constant frequency;
synchronization signal generating means (202) for generating a horizontal synchronization signal that determines a horizontal synchronization period on said display (34), and a vertical synchronization signal that determines a vertical synchronization period on said display, based on the base clock;
transfer signal generating means (27) for generating a transfer signal that transfers the display signal to said display (34) based on the base clock;
signal outputting means (207) for displaying the image on said display (34) based on the display signal, the horizontal synchronization signal and the vertical synchronization signal output in accordance with the transfer signal; and
timing varying means (209, 210) for varying a timing of generating the vertical synchronization signal in accordance with the set display speed, varying a timing of generating the transfer signal, and varying an interval at which images are displayed.

9. A radio communication method **characterized in that** said method comprises:
receiving a signal including a speech signal and a data signal (ST-A1);
converting the data signal separated from the signal into a display signal (ST-A4);
setting a display speed selected from values of display speeds for displaying data (ST-A7); and
displaying the data as an image based on the display signal at the set display speed (ST-A9).

10. The radio communication method according to claim 9, **characterized in that** the display speed can be set as a speed corresponding to a moving picture display mode or a text display mode.

11. The radio communication method according to claim 10, **characterized in that** the display speed corresponding to a text display mode comprises a display speed corresponds to a first text display mode, and a second text display mode at a lower speed than a speed in the first text display mode.

12. The radio communication method according to claim 9, **characterized by** further comprises:
specifying a display mode corresponding to the display speed (ST-A5); and
storing the specified display mode (ST-A6).

13. The radio communication method according to claim 9, **characterized in that** the display speed can vary with display modes comprising a moving picture display mode, a text display mode, and a stand-by display mode for displaying a stand-by image.

14. The radio communication method according to claim 9, **characterized in that** said setting comprises:
setting a frequency of a base clock in accordance with the set display speed (ST-B1);
generating a synchronization signal based on the base clock (ST-B3);
driving and synchronizing in accordance with the synchronization signal and the display signal (ST-B4); and
displaying the image at the set display speed (ST-B5).

15. The radio communication method according to claim 9, **characterized in that** said setting comprises:
varying a timing of generating, in accordance with a set display speed, a vertical synchronization signal that determines a vertical synchronization period based on a base clock, and a timing of generating a transfer signal that transfers the display signal based on the base clock, so that an interval at which images are displayed is varied (ST-C2); and
displaying the image based on the display signal, a horizontal synchronization signal that determines a horizontal synchronization period based on the base clock, and the vertical synchronization signal output in accordance with the transfer signal (ST-C5, ST-C6).
